Europäisches Patentamt

European Patent Office

Office européen des brevets

(11) Numéro de publication: **0 429 326 A1**

## (12) DEMANDE DE BREVET EUROPEEN

(21) Numéro de dépôt: 90403076.4

(22) Date de dépôt: 30.10.90

(51) Int. Cl.5: **F16D 3/202**, F16D 3/24

(30) Priorité: 17.11.89 FR 8915105

(43) Date de publication de la demande:
29.05.91 Bulletin 91/22

(84) Etats contractants désignés:
DE ES GB IT

(71) Demandeur: GLAENZER SPICER
10 Rue J.P. Timbaud
F-78301 Poissy(FR)

(72) Inventeur: Orain, Michel
10, rue des Côtes de Vannes
F-78700 Conflans-Ste-Honorine(FR)

(74) Mandataire: Kohn, Philippe et al
c/o CABINET LAVOIX 2, place d'Estienne
d'Orves
F-75441 Paris Cédex 09(FR)

(54) **Joint de transmission articulé télescopique, notamment pour l'automobile.**

(57) Le joint comprend un tripode (1) muni de trois tourillons sphériques (41, 42, 43) et un barillet (6) avec six pistes intérieures cylindriques (7). Des éléments intermédiaires (10) comportent une surface (11) complémentaire du tourillon sphérique (41) et une surface (12) de profil circulaire complémentaire du profil circulaire des pistes (7), appuyée en permanence, de manière glissante, dans les pistes (7).

FIG.1

La présente invention concerne un joint de transmission articulé télescopique, notamment pour l'automobile.

On connaît d'après le FR-A- 2 607 883 un joint de transmission homocinétique comprenant un tripode, muni de trois bras disposés sensiblement radialement par rapport à son axe et partiellement entourés chacun par deux segments de galet dont les faces radialement extérieures, de profil transversal courbe, sont en contact de roulement avec les pistes longitudinales formées sur la face intérieure d'un élément creux, de forme générale cylindrique, ou "barillet" entourant le tripode.

En service, la composante axiale des mouvements de chaque bras du tripode dans le barillet, tels qu'ils résultent du mouvement télescopique du joint ou du fonctionnement sous angle se traduit en principe par un roulement sans glissement des segments de galet sur leur piste respective. Ce mouvement de roulement est tel que lorsqu'un bras du tripode se dirige vers l'une ou l'autre de ses fins de course axiale dans le barillet, les segments de galet associés s'effacent vers l'arrière du bras relativement au sens du mouvement axial considéré. Ceci permet en principe de donner au joint un encombrement axial réduit pour une capacité de débattement axial et angulaire donnée.

Le FR-A- 2 607 883 enseigne en outre, à titre de perfectionnement, de prolonger la surface torique de roulement des segments de galet, à chacune de ses extrémités circonférentielles, par une surface cylindrique tangente ayant même profil transversal que la surface torique. En fin de rotation, cette surface cylindrique vient prendre appui et glisser sur le chemin de roulement qu'elle épouse. Ceci augmente la course utile d'extension-contraction du joint.

Le FR-A- 2 622 653 enseigne diverses dispositions pour obliger chaque segment de galet à effectuer son mouvement de roulement sans glissement lorsque le segment de galet parcourt la piste longitudinale associée.

Ces joints connus ont des qualités mécaniques remarquables. Le roulement sans glissement dans les pistes longitudinales du barillet supprime les frottements, tandis que la combinaison tourillonnement/oscillation entre portées sphériques des segments de galet et des bras du tripode constitue un mouvement sans point d'arrêt très favorable à la lubrification hydrodynamique et à l'auto-polissage des surfaces.

Cependant, les surfaces de roulement c'est-à-dire la surface extérieure torique de chaque segment et le chemin longitudinal correspondant du barillet sont en contact de Hertz, c'est-à-dire un contact théoriquement le long d'une ligne et pratiquement selon une petite surface adjacente à cette ligne, sous une pression relativement importante due à la charge à transmettre. Ceci nécessite que ces surfaces soient très dures. De plus, les inversions de charge, susceptibles d'interrompre et de rétablir brutalement ce contact, peuvent être bruyantes. Pour y remédier, on peut avoir recours à une bonne précision de fabrication ou à un appairage lors de l'assemblage, mais cela est bien sûr plus coûteux.

Le but de l'invention est ainsi de proposer un joint de transmission articulé télescopique encore plus compact, plus économique, et plus silencieux que les joints connus.

L'invention vise ainsi un joint de transmission articulé télescopique, notamment pour l'automobile, comportant un premier élément et un second élément reliés l'un à l'autre de manière articulée et télescopique par six éléments intermédiaires qui comprennent chacun :
- une surface sensiblement sphérique appuyée de manière glissante sur l'une respective de six régions d'appui sensiblement sphériques complémentaires appartenant au premier élément et ayant des centres répartis autour d'un axe du premier élément ; et
- une surface de section transversale sensiblement circulaire qui comporte une région cylindrique et qui est appuyée sur l'une respective de six pistes longitudinales sensiblement cylindriques de profil complémentaire appartenant au second élément et ayant des axes répartis autour d'un axe du second élément.

Suivant l'invention, le joint est caractérisé en ce que chaque élément intermédiaire est un patin dont la région cylindrique est appuyée de manière permanente et glissante sur la piste cylindrique correspondante du second élément.

Ainsi, les patins s'appuient sur les deux éléments sous des pressions relativement faibles réparties sur des surfaces de glissement dont l'aire est considérablement accrue par rapport au contact de roulement des segments de galet connus dans leur piste de roulement. Par conséquent, la matière constituant les surfaces de contact des patins et du second élément peut être beaucoup moins dure que les surfaces de roulement de l'état de la technique. Le coût de matière et le coût de façonnage peuvent donc être abaissés. Une réduction de coût supplémentaire résulte du fait que la surface de coulissement sensiblement cylindrique des patins est plus facile à réaliser que la surface de roulement torique des segments de galet de l'état de la technique.

En cas d'inversion de charge, le rattrapage du jeu circonférentiel ne produit pas de choc car il est amorti par le film d'huile interposé entre les surfaces d'appui sphériques du premier élément et du patin ainsi qu'entre les surfaces de coulissement cylindriques du patin et du deuxième élément.

En outre, le joint selon l'invention peut avoir une très grande course de coulissement sans nécessiter de moyens complémentaires à cet effet.

Finalement, le joint selon l'invention présente les avantages simultanés suivants comparativement aux techniques antérieures :
- simplicité et faible coût de construction ;
- longévité, robustesse et faible encombrement ;
- fonctionnement homocinétique silencieux même lors des inversions de sens du couple avec filtrage des vibrations axiales.

D'autres particularités et avantages de l'invention ressortiront encore de la description ci-après.

Aux dessins annexés, donnés à titre d'exemples non limitatifs :
- la figure 1 est une vue en bout, partiellement en coupe transversale, d'un joint selon l'invention, l'arbre du tripode et deux patins n'étant pas montés
- la figure 2 est une vue en coupe selon le plan II-II de la figure 1, l'arbre du tripode étant monté ;
- la figure 3 est une vue schématique en coupe selon la ligne III-III de la figure 1, la partie droite du joint n'étant que partiellement représentée ;
- la figure 4 est une vue en plan d'un patin, côté portée cylindrique ;
- la figure 5 est une vue en plan d'un patin, côté portée sphérique ;
- la figure 6 est une vue en coupe selon le plan VI-VI de la figure 4 ;
- la figure 7 est une vue analogue à la figure 2, lorsque le joint fonctionne sous un angle de brisure et au moment où l'axe du bras supérieur du tripode est perpendiculaire à l'axe de brisure du joint ;
- la figure 8 est une vue selon la flèche VIII de la figure 7, les patins étant coupés transversalement ;
- la figure 9 est une vue de face du joint fonctionnant sous angle de brisure et au moment où l'axe de l'un des bras du tripode coïncide avec l'axe de brisure du joint, les patins et le barillet étant coupés transversalement ;
- les figures 10 à 17 sont des vues respectivement analogues aux figures 1, 7, 3, 4, 5, 6, 8 et 9, mais concernent un deuxième mode de réalisation de l'invention ;
- la figure 18 est une vue analogue à la figure 1, mais concernant un troisième mode de réalisation de l'invention, les patins n'étant pas représentés dans la moitié gauche de la figure ;
- la figure 19 est une vue en élévation du tripode de la figure 18, avec coupe axiale du bol ;
- la figure 20 est une vue du joint selon le plan XX-XX de la figure 18 dans deux attitudes de l'élément intérieur relativement au barillet ;

- la figure 21 est une vue en bout de l'un des patins des figures 18 à 20 ;
- la figure 22 est une vue en plan du patin de la figure 21, côté portée cylindrique ;
- la figure 23 est une vue en élévation du patin des figures 21 et 22 ;
- la figure 24 est une vue en bout avec coupe transversale partielle, d'un autre mode de réalisation d'un bol compatible avec l'élément intérieur et les patins des figures 18 à 23 ; et
- la figure 25 est une coupe selon le plan XXV-XXV de la figure 24.

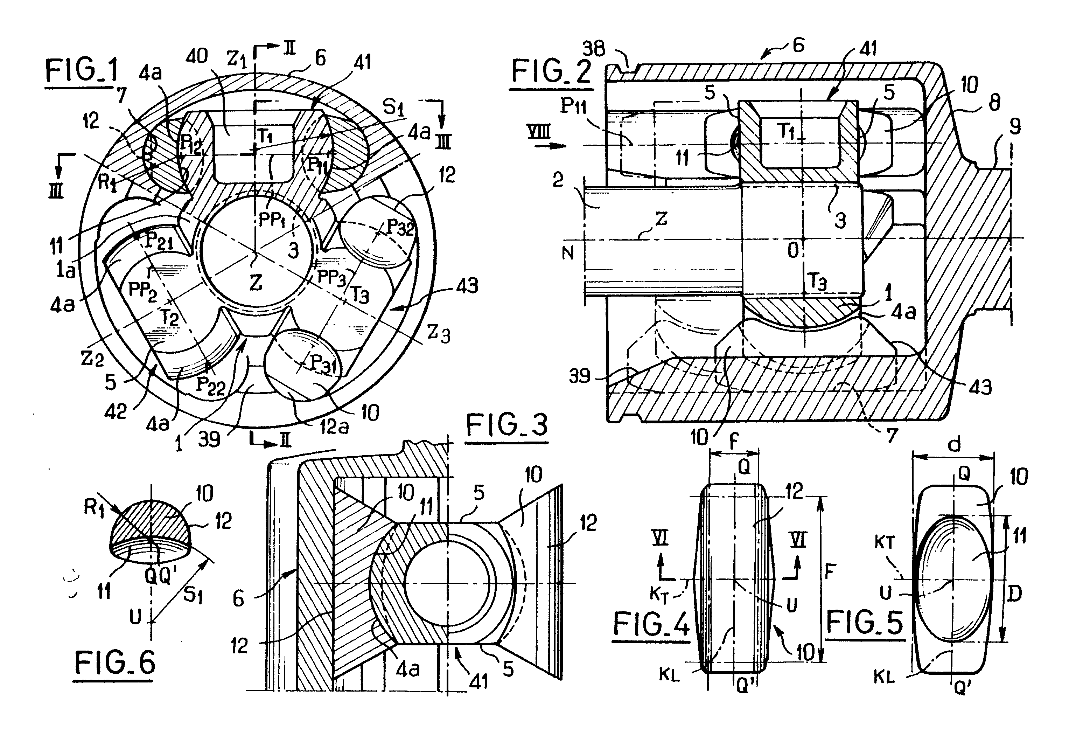

Dans l'exemple représenté aux figures 1 à 9, le joint de transmission, du type homocinétique, sert à relier de manière articulée et télescopique et à assurer la transmission d'un couple entre un arbre 9 qui peut être relié à une source motrice du véhicule et un arbre 2 qui peut être l'arbre de sortie du joint vers la roue motrice d'un véhicule automobile. Le joint comprend un premier élément constitué par un tripode 1 comportant à son tour une bague 1a qui est emmanchée sur l'arbre 2 et qui est rendue solidaire de l'arbre 2 en rotation autour de l'axe commun ON de la bague et de l'arbre 2 au moyen de cannelures classiques ou par tout autre moyen approprié.

Le tripode 1 comprend en outre trois tourillons sphériques 41, 42, 43 solidaires de la bague 1a et s'étendant radialement vers l'extérieur à partir de celle-ci. Les centres $T_1$ , $T_2$ et $T_3$ des tourillons sont répartis régulièrement autour de l'axe ON et sont situés tous les trois dans un même plan coupant l'axe ON perpendiculairement en un point O. De plus, les centres $T_1$, $T_2$ et $T_3$ sont à égale distance de l'axe ON.

Les tourillons sphériques 41, 42, 43 comportent chacun deux régions d'appui sphérique 4a, convexes, qui appartiennent à une même sphère idéale de centre $T_1$, $T_2$, et $T_3$, respectivement selon le tourillon considéré.

Sur chaque tourillon, les deux régions d'appui sphériques 4a sont d'une manière générale diamétralement opposées. Les deux régions d'appui sphériques 4a de chaque tourillon pourraient appartenir à une même zone sphérique s'étendant sur toute la périphérie du tourillon. Ceci peut être préférable pour l'exécution de la rectification finale. Toutefois, dans l'exemple représenté, les tourillons sphériques sont tronqués par deux méplats opposés 5, perpendiculaires à l'axé ON du tripode 1, qui limitent l'épaisseur axiale du tripode à celle nécessaire pour la bague 1 compte tenu du couple à transmettre par les cannelures 3. Ainsi, les régions d'appui sphériques 4a sont, dans l'exemple représenté, séparées circonférentiellement l'une de l'autre par les méplats 5 sur chaque tourillon 4.

Le joint comprend en outre un second élément constitué par un barillet 6, de forme générale cylindrique, qui porte intérieurement six pistes longitudinales 7 ayant un profil transversal concave sensiblement circulaire de rayon $R_1$. Le tourillon 41 s'étend entre les pistes 7 d'axe $P_{11}$ et $P_{12}$ et chacune de ses régions d'appui sphériques 4a est tournée vers l'une respective de ces deux pistes. Il en va de même du tourillon 42 vis à vis des pistes d'axe $P_{21}$ et $P_{22}$, et du tourillon 43 vis à vis des pistes $P_{31}$ et $P_{32}$.

Le barillet 6 fait partie d'un "bol" comprenant en outre un fond 8 qui relie le barillet 6 à l'arbre 9 de prise de puissance motrice d'un véhicule. Les axes des pistes 7 sont parallèles à l'axe Z de l'arbre 9 et situés à égale distance de celui-ci.

Les axes $P_{11}$ et $P_{12}$ des deux pistes 7 situées de part et d'autre du tourillon 41 sont disposés symétriquement de part et d'autre d'un demi-plan $ZZ_1$ issu de l'axe Z et passant par le centre $T_1$. Il en va de même des axes $P_{21}$ et $P_{22}$ vis à vis du demi-plan $ZZ_2$ passant par le centre $T_2$ et des axes $P_{31}$ et $P_{32}$ vis à vis du demi-plan $ZZ_3$ passant par le centre $T_3$.

Comme représenté à la figure 1, lorsque le joint est aligné (axes ON et Z confondus), chaque centre de tourillon $T_1$, $T_2$ ou $T_3$ est situé à une très faible distance radiale au-delà du plan $PP_1$, $PP_2$ ou $PP_3$ auquel appartiennent les deux axes (par exemple $P_{11}$ et $P_{12}$ pour le tourillon de centre $T_1$) des deux pistes 7 situées de part et d'autre de ce tourillon.

La liaison articulée entre le barillet 6 et le tripode s'effectue grâce à six patins 10 dont chacun est interposé entre l'une des pistes 7 et la région d'appui sphérique 4a située en regard. Chaque patin 10 comporte une surface sphérique concave 11 de même rayon $S_1$ que les régions d'appui sphériques 4a et qui est en contact glissant avec la région d'appui sphérique correspondante 4a du tripode. Ainsi, à l'état monté, le centre U de la surface sphérique concave 11 de chaque patin 10 (figure 6) coïncide avec le centre $T_1$, $T_2$ ou $T_3$ du tourillon correspondant (figure 1).

Chaque patin 10 comprend en outre une surface cylindrique convexe à section circulaire 12, d'axe $OQ'$ (figures 4 et 6) et de rayon $R_1$ égal au rayon $R_1$ du profil circulaire des pistes 7. En service, les surfaces cylindriques convexes 12 sont en contact avec les pistes concaves 7, les axes $QQ'$ des surfaces 12 coïncidant respectivement avec les axes $P_{11}$, $P_{12}$, $P_{21}$, $P_{22}$, $P_{31}$ et $P_{32}$ des pistes 7 usinées à l'intérieur du barillet.

Le centre U et l'axe $QQ'$ de chaque patin 10 appartiennent à un même plan de symétrie principale $K_L$ du patin. Un plan de symétrie transversale $K_T$ du patin passe sensiblement par le centre U perpendiculairement à l'axe $QQ'$.

Les patins 10 sont capables de glisser le long des pistes 7 et d'osciller autour des axes précités dans les pistes 7 par leur contact glissant avec ces dernières. Par ailleurs, les patins 10 sont capables de tourillonner et d'osciller sur le tourillons 4 grâce au contact glissant entre les surfaces sphériques concaves 11 des patins 10 et les régions d'appui sphériques 4a des tourillons 4.

Chaque patin 10 est ainsi maintenu, guidé et orienté en toutes directions entre l'une des régions d'appui sphériques convexes 4a centrées en $T_1$, $T_2$ ou $T_3$ d'un tourillon 41, 42 ou 43 et la surface cylindrique de rayon $R_1$ et d'axe $P_{11}$, $P_{12}$, $P_{21}$, $P_{22}$, $P_{31}$ ou $P_{32}$ d'une piste, axe qui coïncide avec son axe $QQ'$, ce qui lui assure une orientation longitudinale précise relativement au barillet et quelle que soit la configuration de fonctionnement du joint.

Le joint qui vient d'être décrit fonctionne de la façon suivante :

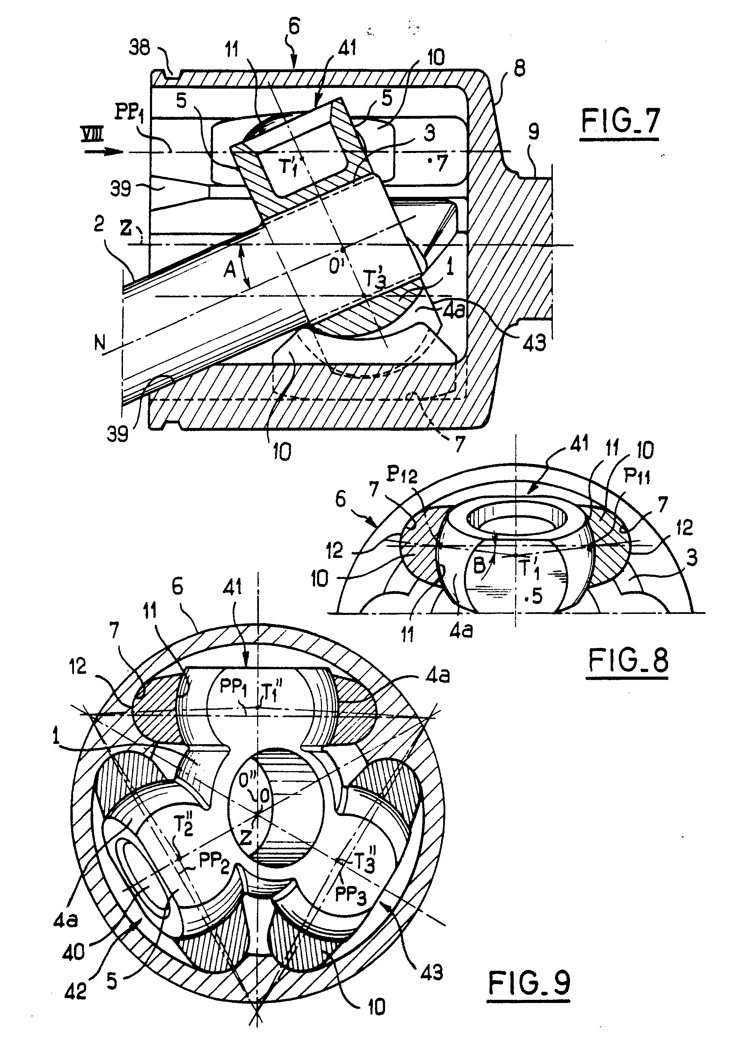

Lorsque le joint passe de sa configuration alignée (figures 1 et 2) à une configuration où l'axe ON de l'arbre 2 est incliné d'un angle A, dit "angle de brisure du joint" par rapport à l'axe Z du barillet 6 (figure 7) autour d'un axe perpendiculaire à l'axe de l'un des tourillons (à la figure 7, l'inclinaison A s'est effectuée autour d'un axe perpendiculaire à l'axe $OT'_1$ du tourillon 41), le centre du tourillon 41 passe de la position T1 représentée à la figure 1, située au-delà du plan $PP_1$ à la position $T'_1$ représentée à la figure 7, située radialement en-deçà du plan $PP_1$. Comme le montre la figure 8, ceci est possible grâce à une inclinaison B prise par les deux patins 10 associés à ce tourillon autour de leurs axes qui coïncident avec les axes $P_{11}$ et $P_{12}$ des pistes 7 dans lesquelles ils se trouvent. En même temps, comme le montre la figure 7, le tourillon 41 s'incline de l'angle A par rapport aux deux patins 10 associés (dont un seul est visible à la figure 7). Cette inclinaison est permise par le contact sphérique glissant entre la surface sphérique concave 11 de ces deux patins et les deux régions d'appui sphériques 4a de ce tourillon.

En même temps, les centres $T_2$ et $T_3$ demeurent à une distance radiale constante de l'axe Z du barillet, et le centre du tripode vient en $O'$.

Quand les arbres 2 et 9 tournent autour de leur axe respectif alors que l'axe géométrique Z de la fusée reste immobile dans la position représentée à la figure 7, le tourillon 4 de centre $T'_1$ va, pendant un tour complet du dispositif, passer successivement dans les positions $T'_2$ (non représentées) et $T'_3$ avant de revenir à la position $T'_1$, le patin 10 correspondant effectuant un aller et retour sur une course déterminée par glissement le long de sa piste 7, et en même temps un mouvement d'oscillation autour de son axe $QQ'$ dans la piste 7 compte tenu des variations de l'angle B (figure 8) pendant un tour du joint.

Pendant sa rotation, le tourillon 41 prend également, deux fois par tour, une position remarquable, dans laquelle l'axe $OT_1$ du tourillon coïncide avec l'axe autour duquel le joint forme l'angle de brisure A. Cette situation est représentée à la figure 9. Pour faciliter la comparaison avec les autres figures, on a cette fois choisi le cas d'un axe de brisure vertical du joint, de façon que le tourillon $T_1$ soit encore en position haute. La rotation du tripode autour de l'axe $OT_1$ amène les centres des deux autres tourillons 42 et 43 dans des positions $T''_2$ et $T''_3$ plus proches du plan contenant les axes Z et $OT_1$ que les positions $T_2$ et $T_3$. En particulier, les positions $T''_2$ et $T''_3$ sont plus proches de l'axe Z que les positions $T_2$ et $T_3$. Et comme les centres de ces deux tourillons ne peuvent se rapprocher et s'éloigner de l'axe Z qu'en restant dans le plan de symétrie des deux pistes 7 qui leur sont respectivement associées, ce mouvement de rapprochement des centres des tourillons 42 et 43 relativement à l'axe Z a une composante dirigée vers le haut de la figure 9. En conséquence, le tripode se déplace légèrement vers le haut de la figure 9 par rapport au barillet 6. Le centre O passe à la position O'', et le centre du tourillon 41 prend une position $T''_1$ située radialement au-delà de la position $T_1$. Les patins 10 associés au tourillon 41 s'inclinent vers le haut de la figure 9 pour permettre cette position $T''_1$ du centre du tourillon 41.

Bien entendu, au cours de la rotation, les tourillons se trouvent le plus souvent dans une position qui peut être qualifiée de quelconque par rapport à l'axe de brisure du joint. Dans ce cas, le déplacement relatif des patins est une superposition des mouvements décrits pour les deux positions particulières décrites en référence aux figures 7 à 9.

Lorsqu'un centre de tourillon, tel que $T_1$, se déplace jusqu'à la position $T'_1$ (figure 7) le jeu circonférentiel du tourillon entre les deux pistes 7 associées commence par diminuer jusqu'à ce que le centre passe dans le plan $PP_1$, après quoi le jeu recommence à augmenter. Mais ces variations de jeu sont très faibles car le centre du tourillon est toujours à faible distance d'un côté ou de l'autre du plan tel que $PP_1$ associé.

Le joint de transmission selon l'invention présente de nombreux avantages :
- l'invention permet de donner aux patins un allongement important dans la direction de leur mouvement principal relativement au barillet, c'est-à-dire la direction de glissement parallèlement à l'axe du barillet ; ainsi la pression de contact entre les patins et le barillet est faible et les conditions sont favorables à l'établissement d'un film hydrodynamique continu de lubrifiant entre les patins et le barillet ;
- les patins ont une forme simple ;
- les patins ont un faible taux de pression de glissement et de contrainte de flexion, et il n'y a plus de pressions de Hertz, c'est-à-dire de pressions résultant d'un contact théoriquement ponctuel ou linéaire.

Par suite, les patins selon l'invention peuvent être fabriqués en matériau très avantageux, à la fois techniquement pour leur qualité de glissement et économiquement pour leur faible coût de mise en oeuvre. Les matières pouvant convenir sont par exemple : matière plastique renforcée ou non, métaux frittés poreux imprégnés de lubrifiant, aciers revêtus de nylon, alliages divers à base de cuivre, plomb, ou étain, etc....

Le matriçage à froid de patins en acier ou autres métaux est aisé compte tenu de la simplicité des formes des surfaces actives.

Enfin les grandes surfaces de portée de glissement complémentaires permettent non seulement de réaliser une lubrification hydrodynamique continue, mais aussi, deuxième avantage important, un amortissement efficace supprimant les chocs, qui, sinon, auraient lieu lors du rattrapage des jeux circonférentiels lorsque le sens du couple à transmettre est brutalement inversé.

Les patins 10 ont une forme allongée parallèlement à leur axe $QQ'$ qui est aussi la direction de leur mouvement principal relativement au barillet 6 et aux régions d'appui sphériques 4a des tourillons du tripode. Cette particularité accroît non seulement la stabilité directionnelle des patins 10 sur les pistes 7 et l'étendue de leur surface d'appui sur les pistes 7, mais elle augmente aussi leur surface d'appui sur les tourillons 41, 42 ou 43. Il est avantageux que la portée effective selon laquelle la surface sphérique 11 des patins est appuyée sur la région d'appui sphérique 4a des tourillons présente en plan une dimension longitudinale D (figure 5) parallèle à l'axe $QQ'$ égale à 1,5 à 2,5 fois sa largeur d. De plus, la portée effective entre la surface cylindrique 12 des patins 10 et celle des pistes 7 présente avantageusement, un rapport F/f au moins égal à 4, expression dans laquelle F et f sont respectivement la longueur axiale et la largeur de la portée effective vue en plan (figure 4).

Par portée effective, on désigne la partie des surfaces 11 et 12 qui est habituellement en contact avec les régions 4a et les pistes 7 respectivement.

Si les patins sont allongés, c'est-à-dire ont un rapport longueur/largeur élevé, les déformations, en particulier de flexion, intervenant en service, dans chacun des ensembles tourillon-patin-piste qui sont sous charge (dans chaque sens du couple à transmettre il y a trois tels ensembles sous charge et trois autres déchargés) ont pour effet de délester les deux extrémités de chacune des deux portées effectives cylindrique et respectivement sphérique. Ceci favorise la formation et l'entretien du film de lubrification hydrodynamique pendant le fonctionnement du joint sous angle et sous charge.

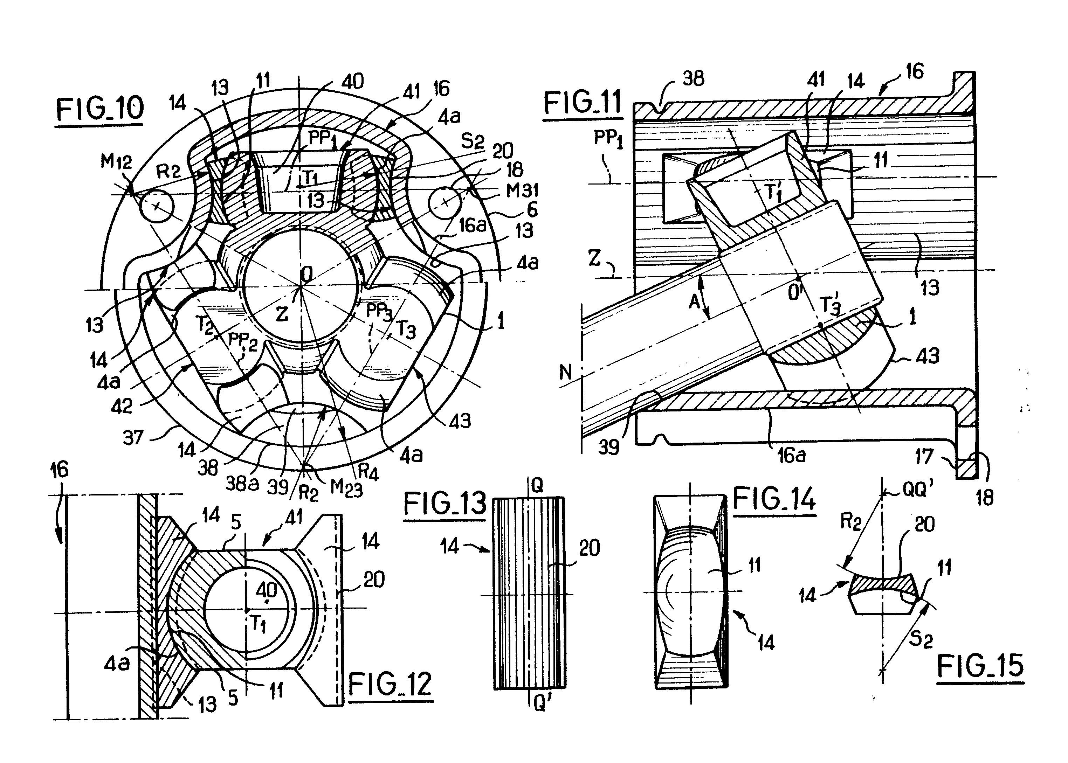

Dans l'exemple représenté aux figures 10 à 17, qui ne sera décrit qu'en ce qui concerne ses différences par rapport au précédent, les pistes longitudinales 13 du barillet sont des pistes cylindriques convexes ayant une section transversale en segment de cercle de rayon $R_2$ et dont les axes $M_{12}$, $M_{23}$ et $M_{31}$ sont situés au-delà des surfaces actives de ces pistes relativement au centre $T_1$, $T_2$ ou $T_3$ du tourillon 41, 42 ou 43 associé.

Comme cela est également représenté aux figures 10 à 17, il est avantageux que chaque axe $M_{12}$, $M_{23}$ ou $M_{31}$ soit commun à deux pistes adjacentes coopérant avec deux tourillons différents. Chaque paire de pistes 13 ayant un axe commun $M_{12}$ ou $M_{23}$ ou $M_{31}$ est formée par deux régions longitudinales, s'étendant côte à côte , d'une même surface cylindrique convexe tournée vers l'axe Z du barillet. Ainsi, la surface active cylindrique d'axe $M_{12}$ reçoit à la fois l'un des patins 14 appuyé sur le tourillon 41 et l'un des patins 14 appuyé sur le tourillon 42, la surface cylindrique d'axe $M_{23}$ reçoit deux patins 14 (dont un seul est représenté) coopérant respectivement avec les tourillons 42 et 43 et la surface cylindrique d'axe $M_{31}$ reçoit l'appui de deux patins 14, dont un seul est représenté, coopérant respectivement avec les tourillons 43 et 41.

De plus, comme dans l'exemple des figures 1 à 9, les plans $PP_1$, $PP_2$ ett $PP_3$ qui contiennent chacun les deux axes $M_{12}$ et $M_{31}$ ou $M_{23}$ et $M_{12}$ ou $M_{31}$ et $M_{23}$ des deux pistes 13 situées de part et d'autre de chaque tourillon 41, 42 ou 43 passent sensiblement par le centre $T_1$, $T_2$ ou $T_3$ du tourillon assoscié. Dans ces conditions :

$OT_1 = ZM_{12} \times \cos 60°$

Par conséquent :

$ZM_{12} = 2 \times OT_1$.

Dans cette expression :

$OT_1$ = distance entre le point O et le centre $T_1$

$ZM_{12}$ = distance entre l'axe Z et l'axe $M_{12}$.

On aboutit ainsi à un simplification sensible de la réalisation des pistes 13 ainsi qu'à un rapport capacité/encombrement optimum. Mais on comprendra que les pistes contigües pourraient présenter une section formée de deux arcs de cercle séquents, de rayon plus grand ou plus petit que $R_2$.

A la partie supérieure de la figure 10 et aux figures 11, 12, 16 et 17, le barillet 16 est représenté avec une épaisseur sensiblement constante, ce qui permet de le réaliser en tôle emboutie. Il comporte alors à son extrémité une bride de fixation 17 pour son raccordement à un fond tel que le fond 8 de la figure 2. La forme convexe cylindrique des pistes 13 définit sur la surface périphérique extérieure du barillet 16 des évidements longitudinaux 16a qui permettent d'engager des vis de fixation -non représentées- de la bride 17 à travers des trous 18 pratiqués dans cette bride en regard des évidements 16a.

Dans la variante représentée en bas de la figure 10, le barillet est constitué d'un tube 37 dont la paroi extérieure est cylindrique et dont la paroi intérieure, également cylindrique, porte trois baguettes longitudinales 38, biconvexes, ayant une surface radialement extérieure 38a complémentaire de la paroi intérieure du tube 37 et appliquée sur celle-ci, et une paroi radialement extérieure de rayon $R_2$ définissant deux pistes 13 adjacentes destinées à coopérer avec deux patins 14 appuyés sur deux tourillons différents. Les baguettes 38 peuvent être fixées au tube 37 par boulonnage, soudure, collage, etc... Le tripode du mode de réalisation des figures 10 à 17 est analogue à celui des figures 1 à 9.

Chacun des patins 14 comporte une surface sphérique 11 concave appuyée de manière glissante contre une région d'appui sphérique convexe 4a de l'un des tourillons, et une surface cylindrique 20 d'axe $QQ'$ et de rayon R2, également concave, opposée à la surface sphérique 1 et appuyée de manière glissante contre l'une des pistes 13.

A l'état monté, le centre de la surface sphérique 11 de chaque patin 14 coïncide avec le centre $T_1$, $T_2$ ou $T_3$ du tourillon associé et l'axe $QQ'$ du patin coïncide avec l'axe $M_{12}$, $M_{23}$ ou $M_{31}$ de la piste 13 associée.

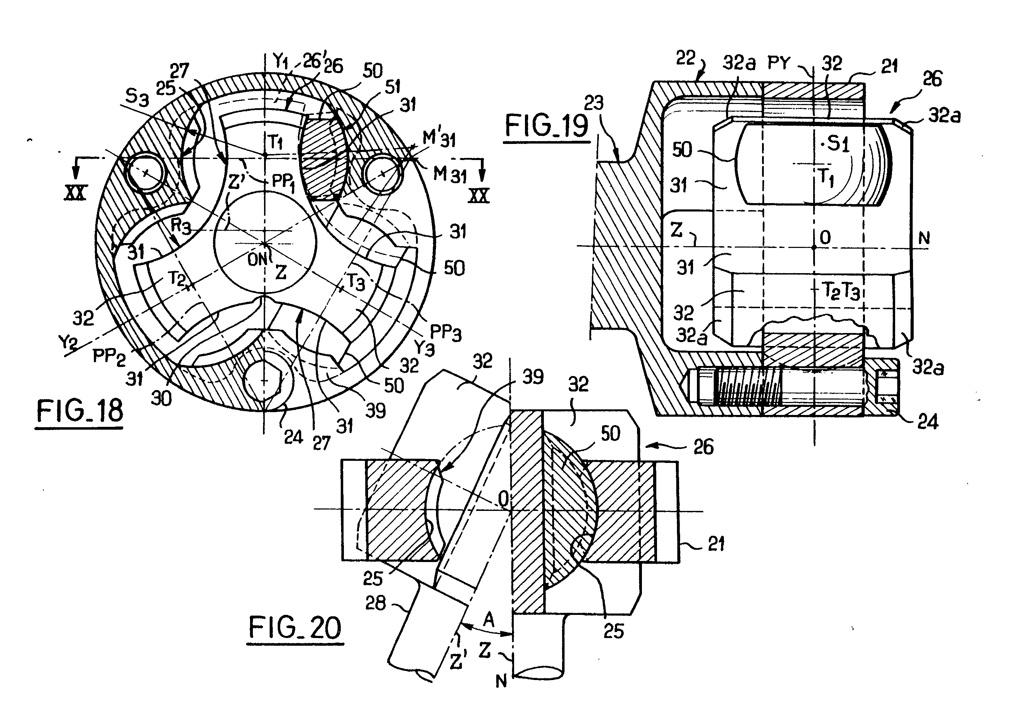

Le mode de réalisation des figures 18 à 23 ne sera décrit qu'en ce qui concerne ses différences par rapport à celui de la figure 1.

Le barillet 21, axialement très court, est fixé à la surface annulaire d'extrémité d'un flasque 22 en forme de coupelle dont la concavité est tournée vers le barillet 21. Le fond de la coupelle est raccordé d'un seul tenant avec un arbre de prise de puissance 23 qui peut être une fusée de roue d'automobile. La fixation du barillet 21 sur le flasque 22 est réalisée par des vis à six pans creux 24 s'étendant axialement .

Dans ce mode de réalisation, le barillet 21 constitue le premier élément du joint en ce sens que c'est lui qui comporte intérieurement trois paires de régions d'appui sphériques 25, lesquelles sont concaves et de rayon $S_3$. Les deux régions sphériques 25 de chaque paire sont disposées symétriquement de part et d'autre de l'un respectif de trois demi-plans OY1, OY2 et OY3, issus de l'axe ON du barillet et répartis angulairement à 120° les uns des autres autour de cet axe. De plus, les deux régions d'appui sphériques 25 de chaque paire appartiennent à une même sphère idéale dont le centre $T_1$, $T_2$ ou $T_3$ est donc situé sur le demi-plan de symétrie OY1, OY2 ou OY3 correspondant. Les centres $T_1$, $T_2$ et $T_3$ des portées sphériques sont situés dans un même plan PY (figure 19) perpendiculaire à l'axe ON du barillet 21 en O.

Le joint des figures 18 à 23 comprend en outre, à titre de second élément, un élément d'entraînement interne 26 qui comporte trois surfaces cylindriques concaves 27 de rayon R3 et d'axe $M_{12}$, $M_{23}$ et $M_{31}$ parallèles à l'axe Z de l'élément d'entrainement 26 et d'un arbre d'entrée 28 dont l'élément d'entrainement 26 est solidaire. Les axes $M_{12}$, $M_{23}$ et $M_{31}$ sont régulièrement répartis autour de l'axe 2. Lorsque le joint est aligné, le plan $PP_1$ contenant les axes $M_{12}$ et $M_{31}$ s'étend entre l'axe ON et le centre $T_1$, à très faible distance du centre $T_1$. Il en va de même du plan $PP_2$ contenant les axes $M_{12}$ et $M_{23}$, à l'égard du centre $T_2$, et du plan $PP_3$ contenant les axes $M_{23}$ et $M_{31}$ à l'égard du centre $T_3$.

Les six éléments intermédiaires ou patins cylindrico-sphériques biconvexes 29 s'intercalent chacun entre l'une des surfaces d'appui sphériques 25 du barillet 21 et une piste 31 constituée par une partie longitudinale de l'une des surfaces cylindriques concaves 27. Chaque surface cylindrique concave 27 définit donc deux pistes 31 s'étendant longitudinalement côte à côte. Les deux pistes 31 d'une même surface 27 supportent deux patins 29 appuyés sur deux régions d'appui sphériques 25 qui se suivent circonférentiellement mais qui ont deux centres différents.

Chaque patin 29 comprend une surface sphérique convexe 51 de rayon S3, complémentaire de la région d'appui sphérique concave 25 du barillet 21, et sur sa face opposée, une surface cylindrique convexe 52 de rayon R3 complémentaire de la piste cylindrique concave 31 de l'élément interne 26. Dans le joint à l'état monté, le centre de la surface sphérique convexe 51 de chaque patin coïncide avec le centre $T_1$, $T_2$ ou $T_3$ de la région d'appui sphérique 25 du barillet 21 sur laquelle elle s'appuie, et l'axe de la surface cylindrique convexe 52 coïncide avec l'axe de la piste 31 qui s'appuie sur elle.

L'élément d'entraînement interne 26 a ainsi la forme d'un élément à trois ailettes 32 s'étendant dans des demi-plans axiaux répartis à 120° les uns des autres autour de l'axe Z, chaque surface cylindrique concave 27 s'étendant sur deux ailettes 32 successives, chaque ailette s'étendant entre deux surfaces d'appui sphériques concentriques. Ls ailettes 32 comportent chacune deux biseaux d'extrémité 32a pour accroître l'angle A maximal acceptable compte tenu de l'espace disponible à l'intérieur du bol.

La figure 18 montre deux variantes de réalisation pour la surface cylindrique 27. Les deux surfaces cylindriques 27 supérieures sont continues. Au contraire, la surface cylindrique concave inférieure 27 est discontinue : une rainure longitudinale 30 sépare les deux pistes 31.

Les régions d'appui sphériques concaves 25 peuvent être réalisées économiquement par conformage à froid au moyen d'un outil à expansion.

Dans ce troisième mode de réalisation du joint selon l'invention, le glissement correspondant au mouvement télescopique du joint s'opère sur l'élément interne 26 et non plus comme dans les modes de réalisation précédents sur le barillet. Les figures 18 et 19 montrent le joint à mi-course de coulissement. La partie gauche de la figure 20 montre le joint sous un angle de brisure A autour de l'axe $OT_1$. L'axe Z a pris la position $Z'$, l'axe ON du premier élément (barillet 21) étant supposé immobile. Comme le montre la figure 1, la position $Z'$ est décalée vers le centre $T_1$ par rapport à la position Z. Les axes des pistes cylindriques sont décalés en conséquence, comme le schématise le point $M'_{31}$ à la figure 18. Le plan $PP_1$ se déplace donc radialement au-delà du centre $T_1$ et les plans $PP_2$ et $PP_3$ s'éloignent des centres $T_2$ et $T_3$ en direction de l'axe central du barillet. On a également représenté en pointillés $26'$ à la figure 18 une partie du contour de l'élément d'entraînement 26 dans cette situation.

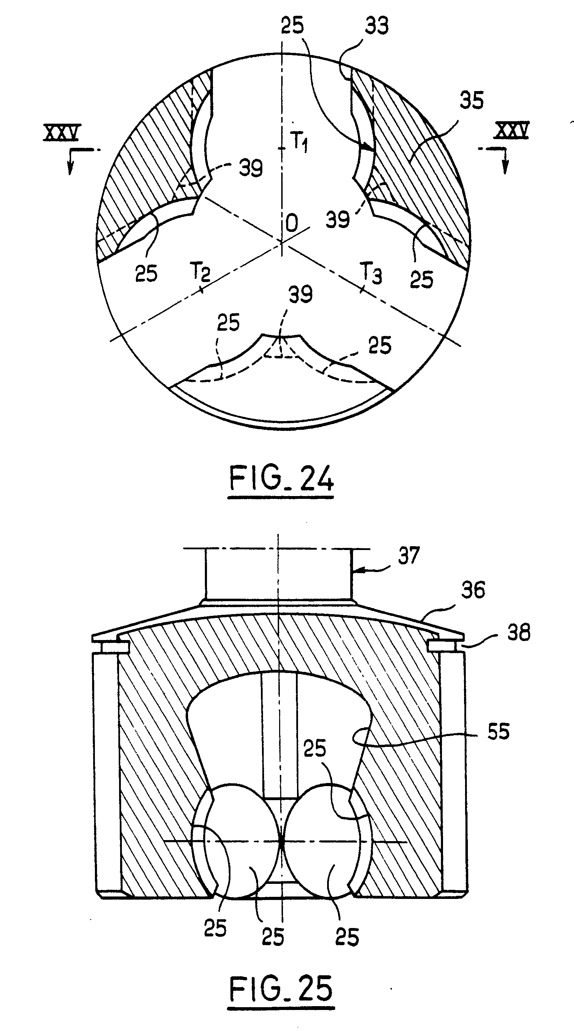

Les figures 24 et 25 montrent un autre mode de réalisation d'un bol utilisable avec l'élément d'entraînement et les patins de la réalisation selon les figures 18 à 23.

Le bol est réalisé d'une seule pièce mais son barillet est ouvert par trois entailles 33 dont chacune comporte sur ses deux faces opposées deux régions d'appui sphériques 25 de même centre $T_1$, $T_2$ ou $T_3$, et de même rayon. Lorsque le joint est monté, chaque entaille 33 reçoit l'une des ailettes 32 de l'élément d'entraînement 26 et permet le débattement angulaire de celle-ci en fonction de l'angle de brisure du joint.

Par ailleurs, les trois entailles 33 permettent le passage d'une meule de rectification des régions d'appui sphériques concaves 25. L'ensemble comprenant le barillet 35, le fond 36 et la fusée 37 peut être usiné à partir d'une pièce brute de forge ou de matriçage.

L'intérieur du barillet 35 s'évase vers le fond 36 à partir des régions d'appui sphériques 25, pour constituer une région en contre dépouille 55 entre les régions 25 et le fond 36.

Dans les trois modes de réalisation décrits, on peut prévoir une gorge trapézoïdale 38 à la périphérie du barillet, destinée à recevoir le talon d'un soufflet d'étanchéité non représenté. Il est également possible de prévoir, de manière classique, des chanfreins 39 le long du bord annulaire libre du barillet pour accroître le débattement angulaire de l'arbre de tripode des figures 1 à 17, ou de l'élément interne 26 des figures 18 à 20.

Enfin, les tourillons des figures 1 à 17 peuvent présenter un évidement central 40 pour les alléger et ajuster leur flexibilité.

Bien entendu, l'invention n'est pas limitée aux exemples décrits et représentés.

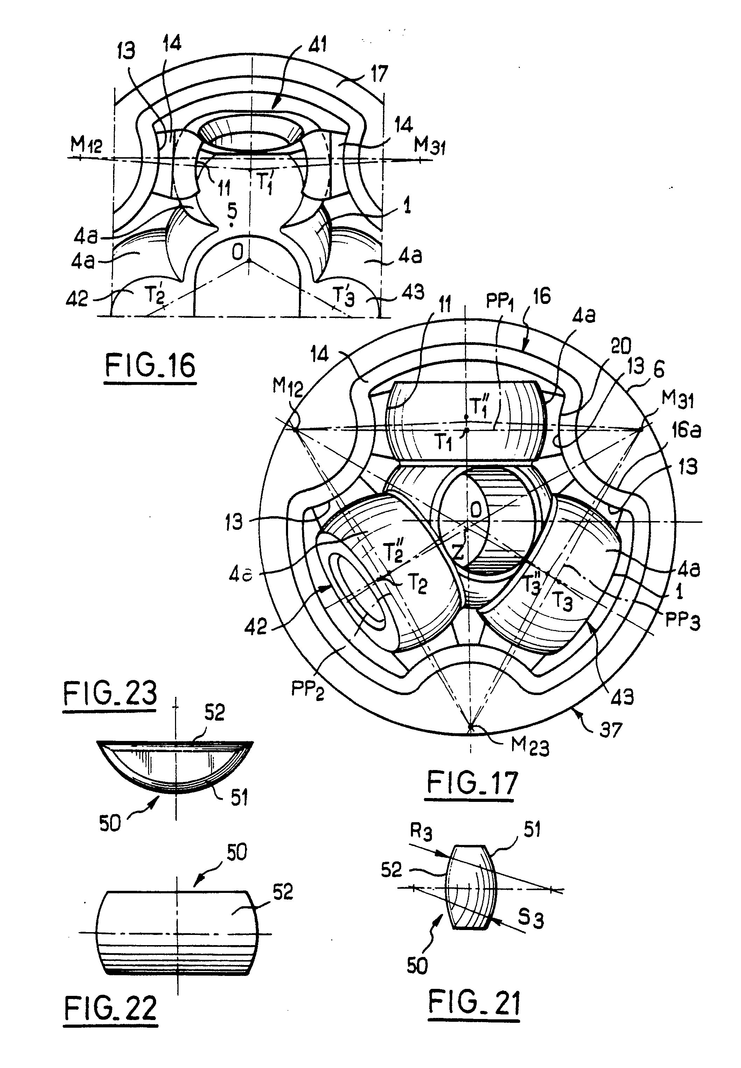

Dans les exemples des figures 10 à 25, toutes les pistes cylindriques pourraient avoir des axes différents. Comme représenté à la figure 17, les tourillons ne présentent pas nécessairement les méplats 5 de la figure 3.

**Revendications**

1. Joint de transmission articulé télescopique, notamment pour l'automobile, comportant un premier élément (1, 21, 35) et un second élément (6, 16) 26) reliés l'un à l'autre de manière articulée télescopique par six éléments intermédiaires (10, 14, 50) qui comprennent chacun :
- une surface sensiblement sphérique (11, 51) appuyée de manière glissante sur l'une respective de six régions d'appui sensiblement sphériques complémentaires (4a, 25) appartenant au premier élément (1, 21, 35) , et ayant des centres ($T_1$, $T_2$, $T_3$) répartis autour d'un axe (ON) du premier élément ; et
- une surface de section transversale sensiblement circulaire qui comprend une surface cylindrique (12, 52) et qui est appuyée sur l'une respective de six pistes longitudinales (7, 13, 31) sensiblement cylindriques de profil complémentaire appartenant au second élément, et ayant des axes $P_{11}$, $P_{12}$, $P_{21}$, $P_{22}$, $P_{31}$, $P_{32}$, $M_{12}$, $M_{23}$, $M_{31}$) répartis autour d'un axe (Z) du second élément,
caractérisé en ce que chaque élément intermédiaire est un patin dont la surface cylindrique (12, 52) est appuyée de manière permanente et glissante sur la piste cylindrique correspondante (7, 13, 31) du second élément (6, 16, 26).

2. Joint de transmission selon la revendication 1, caractérisé en ce que dans chaque élément intermédiaire, le centre (U) de la surface sensiblement sphérique concave (11) et l'axe (QQ') de la surface cylindrique (12) appartiennent à un même plan de symétrie principal ($K_L$) de l'élément intermédiaire, et un plan de symétrie transversal ($K_T$) de l'élément intermédiaire passe sensiblement par le centre (U) de) ladite surface sensiblement sphérique (11).

3. Joint de transmission selon l'une des revendications 1 à 2, caractérisé en ce que les pistes (13, 31) sensiblement cylindriques (13, 31) ont même rayon ($R_2$, $R_3$)et ont deux à deux le même axe ($M_{12}$, $M_{23}$, $M_{31}$).

4. Joint de transmission selon la revendication 3, caractérisé en ce que la distance entre les axes (M12, M23, M31) des pistes (13, 31) et un axe central (Z) du deuxième élément (16, 26) est sensiblement double de la distance entre les centres ($T_1$, $T_2$, $T_3$) des régions d'appui sensiblement sphériques (4a, 25) et un axe (ON) du premier élément (1, 21).

5. Joint de transmission selon l'une des revendications 3 ou 4, dans lequel le deuxième élément est un barillet (16) et les pistes (13) sont des pistes convexes portées par une face intérieure du barillet, caractérisé en ce que la face intérieure du barillet est définie par une paroi périphérique profilée d'épaisseur sensiblement constante.

6. Joint de transmsission selon l'une des revendications 3 ou 4, dans lequel le deuxième élément (16) est un barillet et les pistes (13) sont des pistes convexes portées par une face intérieure du barillet, caractérisé en ce que la face intérieure du barillet est définie par une paroi périphérique emboutie.

7. Joint de transmission selon l'une des revendications 3 ou 4, dans lequel le deuxième élément est un barillet (16) et les pistes (13) sont des pistes convexes, caractérisé en ce que les pistes convexes sont portées par des baguettes (38) rapportées contre une face intérieure d'un tube support (37).

8. Joint de transmission selon l'une des revendications 5 à 7, caractérisé en ce que chaque paire de pistes (13) ayant un axe commun ($M_{12}$, $M_{23}$, $M_{31}$) est en contact avec deux éléments intermédiaires précités (14), appuyés sur des régions d'appui sensiblement sphériques (4a) appartenant à deux tourillons distincts (41, 42, 43) d'un tripode (1) constituant le premier élément.

9. Joint de transmission selon l'une des revendications 3 ou 4, caractérisé en ce que le deuxième élément (26) comprend trois ailettes sensiblement axiales (32) réparties angulairement, et en ce que chaque paire de pistes (31) ayant même axe ($M_{12}$, $M_{23}$, $M_{31}$) s'étend sur deux côtés adjacents de deux ailettes différentes (32) chaque ailette (32) s'étendant entre deux régions d'appui sensiblement sphériques (25) du premier élément, tournées l'une vers l'autre et sensiblement concentriques.

10. Joint de transmssion selon la revendication 9, caractérisé en ce que le premier élément est un barillet (21) rapporté contre une face annulaire terminale d'un flasque (22) en forme de coupelle, ce barillet ayant une face radialement intérieure portant les régions d'appui sensiblement sphériques (25).

11. Joint de transmsission selon la revendication 9, caractérisé en ce eue le premier élément (35) est un barillet faisant partie intégrante d'un bol comportant trois entailles (33) pour les ailettes (32) du deuxième élément (26) chacun des deux côtés de chaque entaille portant l'une respective des régions d'appui sensiblement sphériques (25).

12. Joint de transmission selon l'une des revendications 10 ou 11, caractérisé en ce que la face intérieure du premier élément présente un évidement en contre-dépouille (55) dans une région située axialement entre les régions d'appui sensiblement sphériques (25) et un fond (36) de raccordement avec un arbre (37) du premier élément.

13. Joint de transmission selon l'une des revendications 1 à 12, caractérisé en ce que les patins (10, 14, 50) sont réalisés en une matière choisie dans le groupe comprenant les matières plastiques, les métaux frittés poreux imprégnables de lubrifiant, l'acier revêtu de matière plastique, en particulier de nylon, les alliages à base de cuivre, de plomb ou d'étain.

14. Joint de transmission selon l'une des revendications 1 à 13, caractérisé en ce que, vue en plan, la portée effective sphérique entre la surface sphérique (11) du patin (10) et la région d'appui sphérique (4a) du premier élément (1), a parallèlement à l'axe (QQ') de la surface cylindrique (12s) du patin (10) une dimension longitudinale (D) qui est sensiblement comprise entre 1,5 et 2,5 fois une dimension transversale (d) de cette portée effective vue en plan.

15. Joint de transmission selon l'une des revendications 1 à 14, caractérisé en ce que la portée effective sphérique entre la surface cylindrique (12) de chaque patin (10) et la piste correspondante (7) a une longueur axiale (F) qui est au moins de l'ordre de quatre fois une largeur (f) de ladite portée effective cylindrique vue en plan.

FIG_1

FIG.2

FIG_3

FIG_4

FIG.5

FIG_6

FIG_7

FIG_8

FIG_9

FIG.11

FIG.10

FIG.12

FIG.13

FIG.14

FIG.15

FIG.16

FIG.17

FIG.23

FIG.22

FIG.21

FIG.19

FIG.18

FIG.20

**FIG. 24**

**FIG. 25**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 202 968   (GLAENZER SPICER)<br>* En entier *<br>– – – | 1,2,9,11,<br>12 | F 16 D<br>3/202<br>F 16 D 3/24 |
| Y | US-A-2 599 596   (WILDHABER)<br>* Colonnes 2-5; figures 1-10 *<br>– – – | 1,2,9,11,<br>12 | |
| Y | FR-A-2 628 803   (GLAENZER SPICER)<br>* En entier *<br>– – – | 1,2,9 | |
| Y | GB-A-2 061 01   (HALL)<br>* Pages 2,3; figure 2 *<br>– – – | 1,2,9 | |
| Y | FR-A-2 191 656   (HUTA ZYGMUNT)<br>* En entier *<br>– – – | 1,2,9,10,<br>11 | |
| Y | GB-A-1 495 04   (SMITH)<br>* En entier *<br>– – – | 1,2,9,10,<br>11 | |
| A | GB-A-2 199 638   (GLAENZER SPICER)<br>* Pages 13-17; figures 7-15 *<br>– – – – – | 1,2,9 | |

| DOMAINES TECHNIQUES RECHERCHES (Int. Cl.5) |
|---|
| F 16 D 3/00 |

Le présent rapport de recherche a été établi pour toutes les revendications

| Lieu de la recherche | Date d'achèvement de la recherche | Examinateur |
|---|---|---|
| La Haye | 18 janvier 91 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant